(19) **Europäisches Patentamt**
**European Patent Office**
**Office européen des brevets**

(11) **EP 2 202 899 A1**

(12) **EUROPEAN PATENT APPLICATION**

(43) Date of publication:
**30.06.2010 Bulletin 2010/26**

(51) Int Cl.:
***H04B 15/02*** *(2006.01)*

(21) Application number: **08291230.4**

(22) Date of filing: **23.12.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | • **Peyrusse, Olivier**<br>**31000 Toulouse (FR)**<br>• **Zirphile, Lionel J.**<br>**31200 Toulouse (FR)**<br><br>(74) Representative: **Cross, Rupert Edward Blount**<br>**Boult Wade Tennant**<br>**Verulam Gardens**<br>**70 Gray's Inn Road**<br>**London WC1X 8BT (GB)** |
| (71) Applicant: **Motorola, Inc.**<br>**Schaumburg, IL 60196 (US)** | |
| (72) Inventors:<br>• **Chance, Gregory W.**<br>**Round Lake Beach, Illinois 60073 (US)** | |

(54) **Method and apparatus for spur cancellation**

(57) A method (500) and apparatus (400) of clock harmonic spur removal entails calculating (502) an exact frequency of a clock harmonic spur from Automatic Frequency Control (AFC) values, measuring (504) a spur magnitude and a spur phase of the clock harmonic spur, and canceling (506) a clock harmonic causing the clock harmonic spur and a processor (402) that is operable to perform these functions.

**FIG. 4** <u>500</u>

| | |
|---|---|
| CALCULATE AN EXACT FREQ OF A PREDICTABLE SPUR (SUCH AS CLOCK HARMONIC SPUR) FROM KNOWN PARAMETERS (SUCH AS AUTOMATIC FREQ. CONTROL (AFC) VALUES) | <u>502</u> |
| MEASURE A SPUR MAGNITUDE AND A SPUR PHASE OF THE PREDICTABLE SPUR (CLOCK HARMONIC SPUR) | <u>504</u> |
| CANCEL A (CLOCK) HARMONIC CAUSING THE PREDICTABLE SPUR OR CLOCK HARMONIC SPUR. | <u>506</u> |
| CANCEL THE CLOCK HARMONIC USING A DISCRETE FOURIER TRANSFORM (DFT) OR A GOERTZEL ALGORITHM OVER A SLOT AT AN EXACT SPUR FREQUENCY TO ESTIMATE THE SPUR MAGNITUDE AND THE SPUR PHASE OF THE CLOCK HARMONIC SPUR, AND ADD A COMPLEX SINE WAVE AT THE EXACT SPUR FREQ AT THE ESTIMATED SPUR MAGNITUDE AND AT 180 DEGREES OUT OF PHASE WITH THE ESTIMATED SPUR PHASE TO RECEIVED DATA | <u>508</u> |
| CANCEL THE CLOCK HARMONIC USING A LEAST SQUARES METHOD OR A LINDOFF METHOD TO ESTIMATE A CLOCK HARMONIC SPUR MAGNITUDE AND PHASE OVER A SLOT AND WHERE A COMPLEX SINE WAVE IS ADDED AT THE ESTIMATED MAGNITUDE AND AT 180 DEGREES OUT OF PHASE WITH THE ESTIMATED PHASE TO SLOT | <u>510</u> |
| CANCEL THE CLOCK HARMONIC BY DOWNCONVERTING AN IMPAIRED RECEIVED SIGNAL SO THAT THE SPUR IS SHIFTED TO DC, AVERAGE THE DOWNCONVERTED RECEIVED SIGNAL OVER A TIME PERIOD (SUCH AS A TIME SLOT OR SLOTS) TO DETERMINE A SPUR MAGNITUDE AND PHASE, CANCELING OUT THE DC TO PROVIDE A RESULTANT SIGNAL, AND UPCONVERTING THE RESULTANT SIGNAL USING A SAME CLOCK HARMONIC SPUR FREQUENCY. | <u>512</u> |
| ESTIMATE THE MAGNITUDE AND THE PHASE OF THE CLOCK HARMONIC SPUR IN THE PRESENCE OF A DESIRED SIGNAL, AND THEN REMOVE THE CLOCK HARMONIC SPUR FROM A SAME SET OF DATA SAMPLES THAT WERE USED FOR THE ESTIMATES OF THE MAGNITUDE AND THE PHASE OF THE CLOCK HARMONIC SPUR. | <u>514</u> |
| BUFFER A SINGLE SLOT OF DATA SAMPLES, ESTIMATE THE MAGNITUDE AND THE PHASE, AND CANCEL THE CLOCK HARMONIC SPUR ON THE DATA SAMPLES. | <u>516</u> |
| CANCEL THE CLOCK HARMONIC SPUR IN THE TIME DOMAIN. | <u>518</u> |
| ACCURATELY CALCULATE THE EXACT FREQUENCY OF THE CLOCK HARMONIC SPUR BASED ON AFC VALUES AND ESTIMATE THE MAGNITUDE AND PHASE OF THE SPUR AT THE EXACT FREQUENCY OF THE CLOCK HARMONIC SPUR. | <u>520</u> |
| CANCEL MULTIPLE CLOCK HARMONIC SPURS BASED ON DIFFERENT AFC VALUES. | <u>522</u> |
| TURNING OFF DYNAMICALLY THE CANCELING OF THE HARMONIC SPUR BASED ON A MEASURED OR A PREDICTED DESIRED SIGNAL LEVEL OR SPUR LEVEL. | <u>524</u> |

## Description

## FIELD

This subject matter herein relates generally to spur cancellation and more particularly to methods and devices for removing spurs.

## BACKGROUND

Modern multimode radios utilize multiple digital clocks of different frequencies. These digital clocks produce undesired clock harmonics, known as spurs or clock harmonic spurs that can fall within desired radio channels and desense the radio receiver. Clock harmonics are signals at multiples of given clock frequencies in a system. In many cases it is impossible to set the clock frequencies to avoid having the spurs fall within desired radio channels. Reducing the spurs to an acceptable level is not always possible or requires hardware changes which can be expensive and extend development time.

Most modern techniques for spur removal require the calibration of the spur frequency, magnitude, and phase "offline". In other words, the spur is calibrated without any desired signal present in order to accurately estimate the spur. Several existing techniques remove the spur in the frequency domain by subtracting the magnitude and phase of the calibrated spur from the associated FFT bins rather than removing the spur in the time domain. Furthermore, existing techniques fail to accurately calculate the frequency of the spur or accurately estimate the magnitude and phase thereof, and hence fail to provide an accurate cancellation of the spur. SUMMARY

Embodiments in accordance with the present invention can provide a method and apparatus of canceling spurs that result from clock harmonics or other predictable sources.

In a first embodiment of the present invention, a method of clock harmonic spur removal entails calculating an exact frequency of a clock harmonic spur from Automatic Frequency Control (AFC) values, measuring a spur magnitude and a spur phase of the clock harmonic spur, and canceling a clock harmonic causing the clock harmonic spur.

In a second embodiment of the present invention, a method of spur removal involves calculating an exact frequency of a predictable spur from known parameters, measuring a spur magnitude and a spur phase of the predictable spur, and canceling a harmonic causing the predictable spur.

In a third embodiment of the present invention, a device can include a controller operable to calculate an exact frequency of a clock harmonic spur from Automatic Frequency Control (AFC) values, measure a spur magnitude and a spur phase of the clock harmonic spur, and cancel a clock harmonic causing the clock harmonic spur.

The terms "a" or "an," as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The term "coupled," as used herein, is defined as connected, although not necessarily directly, and not necessarily mechanically.

The terms "program" or "software application" are defined as a sequence of instructions designed for execution on a computer system. A program, computer program, or software application may include a subroutine, a function, a procedure, an object method, an object implementation, an executable application, an applet, a servlet, a source code, an object code, a shared library/ dynamic load library and/or other sequence of instructions designed for execution on a computer system. The term "predictable spur" can mean spurs that not only come from clock harmonics, but that have a predetermined frequency or presence in a received signal. A predictable spur can also be any constant sine wave-like interfering signal.

Other embodiments, when configured in accordance with the inventive arrangements disclosed herein, can include a system for performing and a machine readable storage for causing a machine to perform the various processes and methods disclosed herein.

## BRIEF DESCRIPTION OF THE DRAWINGS

FIG. 1 is a flow diagram illustrating a method of spur in accordance with an embodiment of the present invention.

FIG. 2 is device providing sources of clock harmonics in accordance with an embodiment of the present invention.

FIG. 3 is a block diagram of an electronic device in accordance with an embodiment of the present invention.

FIG. 4 is flow chart illustrating a method of spur cancellation in accordance with an embodiment of the present invention.

## DETAILED DESCRIPTION OF THE DRAWINGS

While the specification concludes with claims defining the features of embodiments of the invention that are regarded as novel, it is believed that the invention will be better understood from a consideration of the following description in conjunction with the figures, in which like reference numerals are carried forward.

Embodiments herein can be implemented in a wide variety of ways using a variety of technologies that enable not only cancellation of clock harmonic spurs but cancellation of any constant sine wave-like interfering signal, regardless of its source. The presence and frequency of the spur in the received signal should be known beforehand. The actual source does not matter in the processing performed.

More particularly in one embodiment, channels corresponding to reference clock harmonics (e.g. 18*52MHz = 936MHz) typically have issues with receiver desense due to clock harmonic interference. The clock harmonic spur frequency can be calculated from an automatic frequency control (AFC) value that is applied. Clocks with the same AFC value as the radio frequency local oscillator or RF LO can be downconverted to DC (for example, after very low intermediate frequency or VLIF downconversion). Thus, clocks using the same AFC correction as the RF LO can use a DC offset removal algorithm to remove spurs.

Clocks that are not AFC corrected (for example a temperature controlled crystal oscillator or TCXO) or corrected by a different AFC value may show up as an in-band spur. This can present a problem if the spur is outside of DC offset removal algorithm bandwidth.

Spur estimation can be done by calculating an exact frequency of the spur using AFC values. In particular

Harmonics of uncorrected clocks have a frequency offset equal to the AFC value applied to the RF LO. Harmonics of clocks corrected by a different AFC value have a frequency offset equal to the difference of the AFC value applied to the clock and the AFC value applied to the RF LO

The magnitude and phase of a spur can be measured in a variety of ways. One technique uses the correlation of the signal with sinusoid at spur frequency. In this regard, the Goertzel algorithm could be considered (same as single bin DFT)

$$H_k(z) = \frac{1 - W_N^k \, z^{-1}}{1 - 2\cos\left(\frac{2\pi}{N}k\right)z^{-1} + z^{-2}}$$

It is also possible to incorporate channel estimation using an LS or Lindoff method to determine magnitude and phase with better accuracy. See "BER Performance Analysis of a Direct Conversion Receiver" by Bengt Lindoff and Peter Malm, IEEE Transactions on Communications, VOL. 50, NO. 5, MAY 2002.

Note that a Sine wave 180 degrees out of phase can be added to a burst signal to achieve spur cancellation. This technique is significantly more frequency selective than a notch filter and avoids any group delay issue. The techniques herein have a very accurate frequency for the spur since it is calculated from AFC values. The accuracy of the magnitude and phase estimation is also significant. A correlation method may be limited due to accuracy concerns. The LS or Lindoff method provides better accuracy for more processing power or MIPS. The techniques herein are best for spurs with low phase noise (for example, TCXO harmonics), but are not necessarily limited thereto.

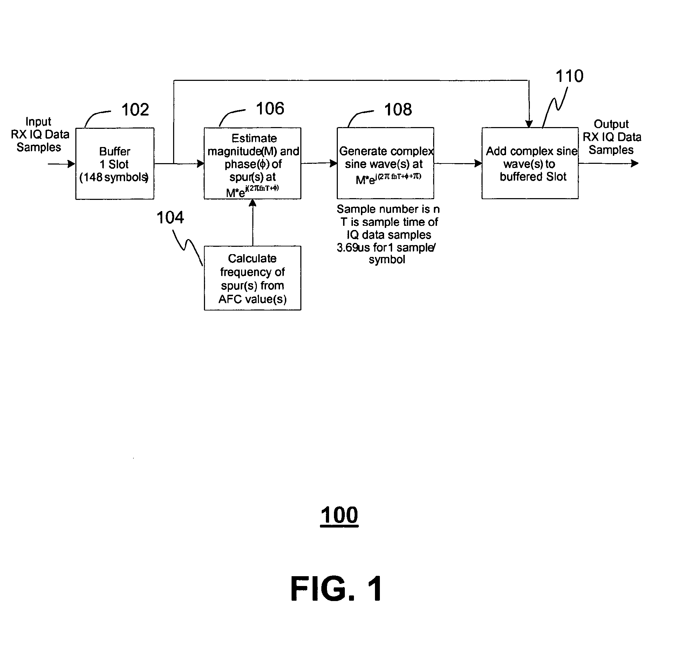

Referring to FIG. 1, a method 100 of spur cancellation in the context of GSM modulation or signaling is shown that includes the steps of buffering a slot (or 148 symbols) of received I and Q data samples at 102 and estimating at 106 the magnitude (M) and the phase (φ) of the clock harmonic spur using a calculated frequency of the spur based on AFC values obtained at 104. A complex sine wave or waves can be generated at 108. The complex sine wave or waves can be added at the exact spur frequency at the estimated spur magnitude and at 180 degrees out of phase with the estimated spur phase to the received data at 110 to cancel the clock harmonic spur.

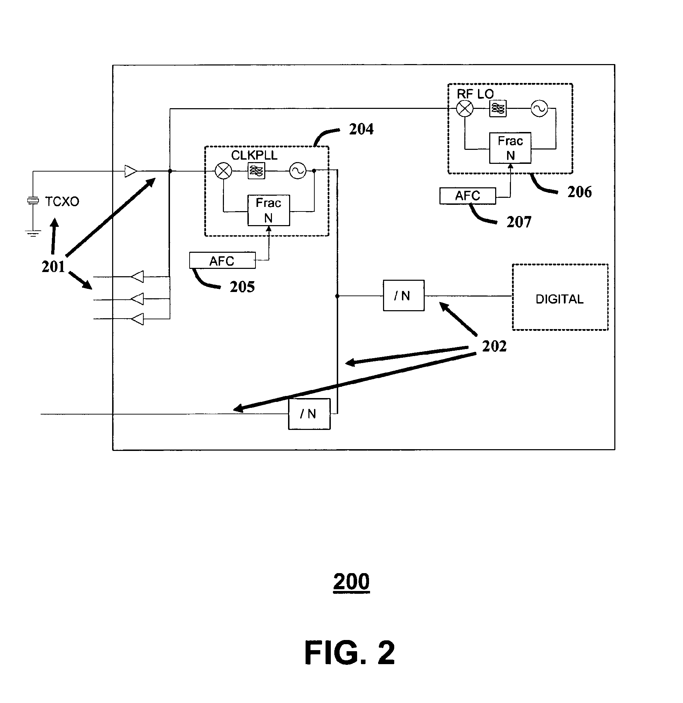

Referring to FIG. 2, a processor 200 illustrates several sources of clock harmonics that come from either corrected clocks 202 generated by the PLL clock 204 or uncorrected clocks 201. The RF LO 206 is corrected according to AFC 207. Harmonics of uncorrected clocks 201 are seen within the desired channel having a frequency offset equal to -AFC 207. Harmonics of corrected clocks 202 generated by the PLL clock 204 are seen within the desired channel having a frequency offset equal to AFC 205 - AFC 207.

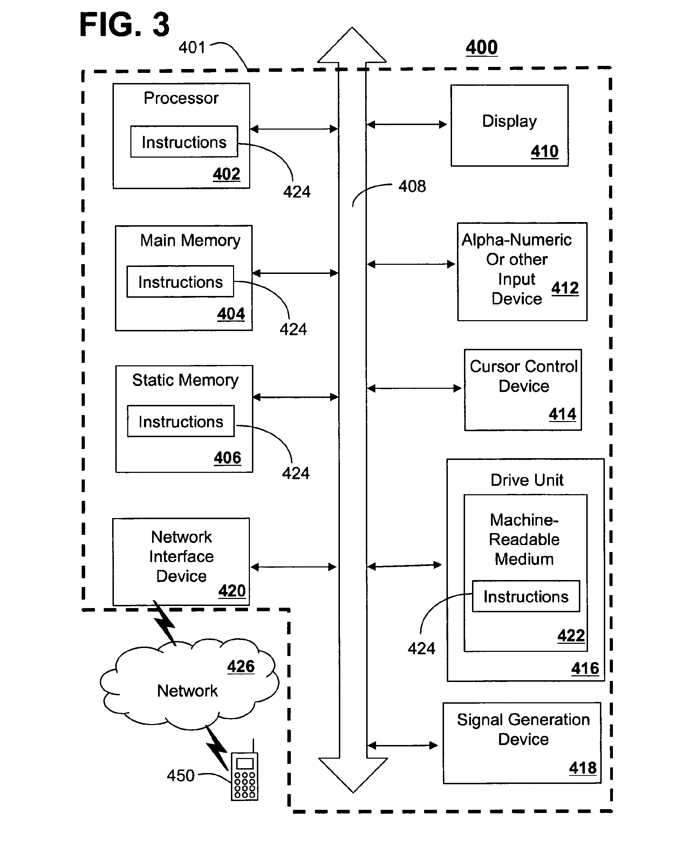

In another embodiment of the present invention as illustrated in the diagrammatic representation of FIG. 3, an electronic product 401 such as a machine having a display 410 can include a processor or controller 402 coupled to the display. The device 401 can be a handheld device selected among a cellular phone, a personal digital assistant, a smart phone, an MP3 Player, a music player, a remote controller, a wrist-worn computer, and a watch for example. Generally, in various embodiments it can be thought of as a machine in the form of a computer system 400 within which a set of instructions, when executed, may cause the machine to perform any one or more of the methodologies discussed herein. In some embodiments, the machine operates as a standalone device. In some embodiments, the machine may be connected (e.g., using a network) to other machines. In a networked deployment, the machine may operate in the capacity of a server or a client user machine in server-client user network environment, or as a peer machine in a peer-to-peer (or distributed) network environment. For example, the computer system can include a recipient device 401 and a sending device 450 or vice-versa.

The machine may comprise a server computer, a client user computer, a personal computer (PC), a tablet PC, personal digital assistant, a cellular phone, a laptop computer, a desktop computer, a control system, a network router, switch or bridge, or any machine capable of executing a set of instructions (sequential or otherwise) that specify actions to be taken by that machine, not to mention a mobile server. It will be understood that a device of the present disclosure includes broadly any electronic device that provides voice, video or data communication or presentations. Further, while a single machine is illustrated, the term "machine" shall also be taken to include any collection of machines that individually or jointly execute a set (or multiple sets) of instructions to perform any one or more of the methodologies discussed herein.

The computer system 400 can include a controller or processor 402 (e.g., a central processing unit (CPU), a graphics processing unit (GPU, or both), a main memory 404 and a static memory 406, which communicate with each other via a bus 408. The computer system 400 may further include a presentation device such the flexible display 410. The computer system 400 may include an input device 412 (e.g., a keyboard, microphone, etc.), a cursor control device 414 (e.g., a mouse), a disk drive unit 416, a signal generation device 418 (e.g., a speaker or remote control that can also serve as a presentation device) and a network interface device 420. Of course, in the embodiments disclosed, many of these items are optional.

The disk drive unit 416 may include a machine-readable medium 422 on which is stored one or more sets of instructions (e.g., software 424) embodying any one or more of the methodologies orfunctions described herein, including those methods illustrated above. The instructions 424 may also reside, completely or at least partially, within the main memory 404, the static memory 406, and/or within the processor or controller 402 during execution thereof by the computer system 400. The main memory 404 and the processor or controller 402 also may constitute machine-readable media.

Dedicated hardware implementations including, but not limited to, application specific integrated circuits, programmable logic arrays, FPGAs and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present invention, the methods described herein are intended for operation as software programs running on a computer processor. Furthermore, software implementations can include, but are not limited to, distributed processing or component/object distributed processing, parallel processing, or virtual machine processing can also be constructed to implement the methods described herein. Further note, implementations can also include neural network implementations, and ad hoc or mesh network implementations between communication devices.

The present disclosure contemplates a machine readable medium containing instructions 424, or that which receives and executes instructions 424 from a propagated signal so that a device connected to a network environment 426 can send or receive voice, video or data, and to communicate over the network 426 using the instructions 424. The instructions 424 may further be transmitted or received over a network 426 via the network interface device 420.

While the machine-readable medium 422 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

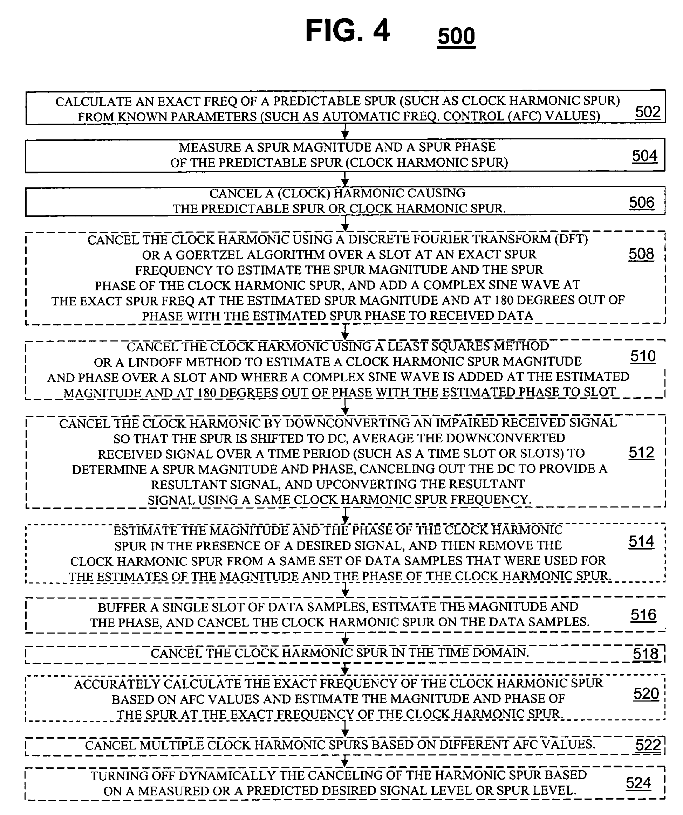

Referring to FIG. 4, a method 500 of spur cancellation can entail calculating at 502 an exact frequency of a predictable spur (such as clock harmonic spur) from known parameters (such as Automatic Frequency Control (AFC) values), measuring at 504 a spur magnitude and a spur phase of the predictable spur (clock harmonic spur), and cancelling at 506 a (clock) harmonic causing the predictable spur or clock harmonic spur. The clock harmonic can be cancelled in various ways in accordance with the embodiments. One technique at 508 can cancel the clock harmonic using a Discrete Fourier Transform (DFT) or a Goertzel algorithm over a slot at an exact spur frequency to estimate the spur magnitude and the spur phase of the clock harmonic spur, and add a complex sine wave at the exact spur frequency at the estimated spur magnitude and at 180 degrees out of phase with the estimated spur phase to received data to cancel the clock harmonic spur. Another technique at 510 can cancel the clock harmonic using a least squares method or a Lindoff method to estimate a clock harmonic spur magnitude and phase over a slot and wherein a complex sine wave is added at the estimated magnitude and at 180 degrees out of phase with the estimated phase to the slot to cancel the clock harmonic spur. In yet another alternative at 512, the method can cancel the clock harmonic by downconverting an impaired received signal so that the clock harmonic spur is shifted to Direct Current (DC), averaging the downconverted received signal over a time period (such as a time slot or a plurality of time slots) to determine a spur magnitude and phase, canceling out the DC to provide a resultant signal, and upconverting the resultant signal using a same clock harmonic spur frequency.

At 514, the method 500 can estimate the magnitude and the phase of the clock harmonic spur in the presence of a desired signal, and then remove the clock harmonic spur from a same set of data samples that were used for the estimates of the magnitude and the phase of the clock harmonic spur. In yet another embodiment, the method 500 at 516 can buffer a single slot of data samples, estimate on the data samples of the single slot the magnitude and the phase, and Cancel the clock harmonic spur on the data samples. Note that the clock harmonic spur can be cancelled in the time domain at 518.

Further note that in accordance with the embodiments, the method 500 at 520 can accurately calculate the exact frequency of the clock harmonic spur based on AFC values and estimate the magnitude and phase of the clock harmonic spur at the exact frequency of the clock harmonic spur. Further note that multiple clock harmonic spurs can be cancelled based on different AFC values at 522. Finally note that the method 500 can turn off the canceling of the harmonic spur dynamically based on a measured or a predicted desired signal level or spur level at 524.

Most modern techniques for spur removal require the calibration of the spur frequency, magnitude, and phase "offline". In other words, the spur is calibrated without any desired signal present in order to accurately estimate the spur. The embodiments herein estimate the spur magnitude and phase in the presence of the desired signal, and then remove the spur from the same set of data samples that were used for the estimation. For the case of GSM/EDGE, a single slot of data samples is buffered, the spur magnitude and phase estimated on the data samples in that slot, and the spur is then cancelled on the same data samples.

Existing art removes the spur in the frequency domain by subtracting the magnitude and phase of the calibrated spur from the associated FFT bins. The embodiments herein remove the spur in the time domain. Canceling the spur in the frequency domain for GSM/EDGE would not likely be a good option due to the bandwidth of the bins. Similarly, a tunable notch filter would not likely be a feasible idea for GSM/EDGE.

Existing art identifies the frequency of the spur by the magnitude and phase found in a full set of FFT bins during calibration. If the spur falls at exactly the center frequency of a bin, only one bin will require the calibrated spur magnitude and phase be subtracted. If the spur falls between center frequencies of FFT bins, the spur energy will leak into multiple FFT bins and these same multiple bins will require subtraction of spur energy found in the bins during calibration. Embodiments herein instead accurately calculate the frequency of the spur based on AFC values and estimates the magnitude and phase of the spur at that exact frequency. This accurate calculation of the frequency allows us to do a more accurate estimation of the magnitude and phase, and allows a very accurate cancellation of the spur in the time domain.

In light of the foregoing description, it should be recognized that embodiments in accordance with the present invention can be realized in hardware, software, or a combination of hardware and software. A network or system according to the present invention can be realized in a centralized fashion in one computer system or processor, or in a distributed fashion where different elements are spread across several interconnected computer systems or processors (such as a microprocessor and a DSP). Any kind of computer system, or other apparatus adapted for carrying out the functions described herein, is suited. A typical combination of hardware and software could be a general purpose computer system with a computer program that, when being loaded and executed, controls the computer system such that it carries out the functions described herein.

In light of the foregoing description, it should also be recognized that embodiments in accordance with the present invention can be realized in numerous configurations contemplated to be within the scope and spirit of the claims. Additionally, the description above is intended by way of example only and is not intended to limit the present invention in any way, except as set forth in the following claims.

## Claims

1. A method of clock harmonic spur removal, comprising:

   calculating an exact frequency of a clock harmonic spur from Automatic Frequency Control (AFC) values;
   measuring a spur magnitude and a spur phase of the clock harmonic spur; and
   cancelling a clock harmonic causing the clock harmonic spur.

2. The method of claim 1, wherein the clock harmonic is cancelled using a Discrete Fourier Transform (DFT) or a Goertzel algorithm over a time period at an exact spur frequency to estimate the spur magnitude and the spur phase of the clock harmonic spur.

3. The method of claim 1, wherein the clock harmonic is cancelled by incorporating channel estimation using a least squares method or a Lindoff method to estimate a clock harmonic spur magnitude and phase over a time period and wherein a complex sine wave is added at the estimated magnitude and at 180 degrees out of phase with the estimated phase to the slot to cancel the clock harmonic spur.

4. The method of claim 1, wherein the clock harmonic is cancelled by downconverting an impaired received signal so that the clock harmonic spur is shifted to Direct Current (DC), averaging the downconverted received signal over a time period to determine a spur magnitude and phase, canceling out the DC to provide a resultant signal, and upconverting the resultant signal using a same clock harmonic spur frequency.

5. The method of claim 1, wherein the time period is a single time slot or a plurality of time slots.

6. The method of claim 1, wherein the method estimates the magnitude and the phase of the clock harmonic spur in the presence of a desired signal, and then removes the clock harmonic spur from a same set of data samples that were used for the estimates of the magnitude and the phase of the clock harmonic spur.

7. The method of claim 1, wherein a single slot of data samples is buffered, the magnitude and the phase is estimated on data samples of the single slot, and the clock harmonic spur is cancelled on the data samples.

8. The method of claim 1, wherein the method cancels the clock harmonic spur in a time domain.

9. The method of claim 1, wherein the method accurately calculates the exact frequency of the clock harmonic spur based on AFC values and estimates the magnitude and phase of the clock harmonic spur at the exact frequency of the clock harmonic spur.

10. The method of claim 1, wherein the method cancels multiple clock harmonic spurs based on different AFC values.

11. A device, comprising:

    a controller operable to:

        calculate an exact frequency of a clock harmonic spur from Automatic Frequency Control (AFC) values;
        measure a spur magnitude and a spur phase of the clock harmonic spur; and
        cancel a clock harmonic causing the clock harmonic spur.

12. The device of claim 11, wherein the clock harmonic is cancelled using a Discrete Fourier Transform (DFT) or a Goertzel algorithm over a predetermined time period at an exact spur frequency to estimate the spur magnitude and the spur phase of the clock harmonic spur, adding a complex sine wave at the exact spur frequency at the estimated spur magnitude and at 180 degrees out of phase with the estimated spur phase to received data to cancel the clock harmonic spur.

13. The device of claim 12, wherein the predetermined time period is a single time slot or a plurality of time slots.

14. The device of claim 11, wherein the controller estimates the magnitude and the phase of the clock harmonic spur in the presence of a desired signal, and then removes the clock harmonic spur from a same set of data samples that were used for the estimates of the magnitude and the phase of the clock harmonic spur.

15. The device of claim 11, wherein controller is operable to cancel multiple clock harmonic spurs using multiple AFC values.

Input
RX IQ Data
Samples

$\boxed{\begin{array}{c} 102 \\ \text{Buffer} \\ \text{1 Slot} \\ \text{(148 symbols)} \end{array}}$

$\boxed{\begin{array}{c} 106 \\ \text{Estimate} \\ \text{magnitude(M) and} \\ \text{phase}(\phi)\text{ of} \\ \text{spur(s) at} \\ M^*e^{j(2\pi f_n T + \phi)} \end{array}}$

$\boxed{\begin{array}{c} 108 \\ \text{Generate complex} \\ \text{sine wave(s) at} \\ M^*e^{j(2\pi f_n T + \phi + \pi)} \end{array}}$

Sample number is n
T is sample time of
IQ data samples
3.69us for 1 sample/
symbol

$\boxed{\begin{array}{c} 110 \\ \text{Add complex sine} \\ \text{wave(s) to} \\ \text{buffered Slot} \end{array}}$

Output
RX IQ Data
Samples

104

$\boxed{\begin{array}{c} \text{Calculate} \\ \text{frequency of} \\ \text{spur(s) from} \\ \text{AFC value(s)} \end{array}}$

<u>100</u>

# FIG. 1

**200**

# FIG. 2

# FIG. 3

401

**400**

Processor

Instructions

**402**

424

Main Memory

Instructions

**404**

424

Static Memory

Instructions

**406**

424

Network Interface Device

**420**

408

Display

**410**

Alpha-Numeric Or other Input Device **412**

Cursor Control Device

**414**

Drive Unit

Machine-Readable Medium

Instructions

**422**

424

**416**

Signal Generation Device

**418**

**426**

Network

450

# FIG. 4    500

CALCULATE AN EXACT FREQ OF A PREDICTABLE SPUR (SUCH AS CLOCK HARMONIC SPUR) FROM KNOWN PARAMETERS (SUCH AS AUTOMATIC FREQ. CONTROL (AFC) VALUES) — 502

MEASURE A SPUR MAGNITUDE AND A SPUR PHASE OF THE PREDICTABLE SPUR (CLOCK HARMONIC SPUR) — 504

CANCEL A (CLOCK) HARMONIC CAUSING THE PREDICTABLE SPUR OR CLOCK HARMONIC SPUR. — 506

CANCEL THE CLOCK HARMONIC USING A DISCRETE FOURIER TRANSFORM (DFT) OR A GOERTZEL ALGORITHM OVER A SLOT AT AN EXACT SPUR FREQUENCY TO ESTIMATE THE SPUR MAGNITUDE AND THE SPUR PHASE OF THE CLOCK HARMONIC SPUR, AND ADD A COMPLEX SINE WAVE AT THE EXACT SPUR FREQ AT THE ESTIMATED SPUR MAGNITUDE AND AT 180 DEGREES OUT OF PHASE WITH THE ESTIMATED SPUR PHASE TO RECEIVED DATA — 508

CANCEL THE CLOCK HARMONIC USING A LEAST SQUARES METHOD OR A LINDOFF METHOD TO ESTIMATE A CLOCK HARMONIC SPUR MAGNITUDE AND PHASE OVER A SLOT AND WHERE A COMPLEX SINE WAVE IS ADDED AT THE ESTIMATED MAGNITUDE AND AT 180 DEGREES OUT OF PHASE WITH THE ESTIMATED PHASE TO SLOT — 510

CANCEL THE CLOCK HARMONIC BY DOWNCONVERTING AN IMPAIRED RECEIVED SIGNAL SO THAT THE SPUR IS SHIFTED TO DC, AVERAGE THE DOWNCONVERTED RECEIVED SIGNAL OVER A TIME PERIOD (SUCH AS A TIME SLOT OR SLOTS) TO DETERMINE A SPUR MAGNITUDE AND PHASE, CANCELING OUT THE DC TO PROVIDE A RESULTANT SIGNAL, AND UPCONVERTING THE RESULTANT SIGNAL USING A SAME CLOCK HARMONIC SPUR FREQUENCY. — 512

ESTIMATE THE MAGNITUDE AND THE PHASE OF THE CLOCK HARMONIC SPUR IN THE PRESENCE OF A DESIRED SIGNAL, AND THEN REMOVE THE CLOCK HARMONIC SPUR FROM A SAME SET OF DATA SAMPLES THAT WERE USED FOR THE ESTIMATES OF THE MAGNITUDE AND THE PHASE OF THE CLOCK HARMONIC SPUR. — 514

BUFFER A SINGLE SLOT OF DATA SAMPLES, ESTIMATE THE MAGNITUDE AND THE PHASE, AND CANCEL THE CLOCK HARMONIC SPUR ON THE DATA SAMPLES. — 516

CANCEL THE CLOCK HARMONIC SPUR IN THE TIME DOMAIN. — 518

ACCURATELY CALCULATE THE EXACT FREQUENCY OF THE CLOCK HARMONIC SPUR BASED ON AFC VALUES AND ESTIMATE THE MAGNITUDE AND PHASE OF THE SPUR AT THE EXACT FREQUENCY OF THE CLOCK HARMONIC SPUR. — 520

CANCEL MULTIPLE CLOCK HARMONIC SPURS BASED ON DIFFERENT AFC VALUES. — 522

TURNING OFF DYNAMICALLY THE CANCELING OF THE HARMONIC SPUR BASED ON A MEASURED OR A PREDICTED DESIRED SIGNAL LEVEL OR SPUR LEVEL. — 524

Europäisches
Patentamt
European
Patent Office
Office européen
des brevets

## EUROPEAN SEARCH REPORT

Application Number

EP 08 29 1230

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 648 093 A (BROADCOM CORP [US]) 19 April 2006 (2006-04-19) * abstract * * paragraphs [0013] - [0018] * * figures 1,2 * ----- | 1,11 | INV. H04B15/02 |
| A | WO 00/55981 A (SIEMENS AG [DE]; MOLIERE THOMAS [DE]) 21 September 2000 (2000-09-21) * page 11, line 14 - line 36 * * page 4, line 25 - page 5, line 24 * * figure 1 * ----- | 1,11 | |
| A | GB 2 310 966 A (MOTOROLA INC [US]) 10 September 1997 (1997-09-10) * abstract * * page 1, line 26 - line 32 * * page 4, line 11 - line 17 * * page 4, line 25 - line 29 * * page 5, line 18 - line 32 * * page 7, line 25 - page 8, line 6 * ----- | 1,11 | |
| D,A | LINDOFF B ET AL.: "BER performance analysis of a direct conversion receiver" IEEE TRANSACTIONS ON COMMUNICATION, vol. 50, no. 5, 5 May 2002 (2002-05-05), pages 856-865, XP002531673 * the whole document * ----- | 3 | **TECHNICAL FIELDS SEARCHED (IPC)** H04B |

The present search report has been drawn up for all claims

| Place of search | Date of completion of the search | Examiner |
|---|---|---|
| Berlin | 11 June 2009 | Masche, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 29 1230

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2009

| Patent document cited in search report | | Publication date | Patent family member(s) | | Publication date |
|---|---|---|---|---|---|
| EP 1648093 | A | 19-04-2006 | NONE | | |
| WO 0055981 | A | 21-09-2000 | CN | 1343393 A | 03-04-2002 |
| | | | EP | 1161799 A1 | 12-12-2001 |
| | | | HU | 0200161 A2 | 29-05-2002 |
| | | | US | 7076215 B1 | 11-07-2006 |
| GB 2310966 | A | 10-09-1997 | AU | 719164 B2 | 04-05-2000 |
| | | | AU | 1483297 A | 11-09-1997 |
| | | | BR | 9701152 A | 15-12-1998 |
| | | | CN | 1160951 A | 01-10-1997 |
| | | | DE | 19708797 A1 | 06-11-1997 |
| | | | FR | 2745674 A1 | 05-09-1997 |
| | | | US | 5745848 A | 28-04-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Bengt Lindoff ; Peter Malm.** BER Performance Analysis of a Direct Conversion Receiver. *IEEE Transactions on Communications,* May 2002, vol. 50 (5